# EUROPEAN PATENT SPECIFICATION

(11) **EP 2 206 848 B1**
(45) Date of publication and mention of the grant of the patent: **26.10.2011**
(21) Application number: 09015766.0
(22) Date of filing: 20.12.2009
(51) Int. Cl.: E04C 5/01, E04C 5/07

(54) **Capsules made from one individual coiled fiber and wrapper of glue, method of their production and method of the production of the reinforced concrete with use of those capsules**
Kapseln aus einzelnen aufgewickelten Fasern mit einer Umhüllung aus Klebstoff, Methode ihrer Produktion und Methode zur Herstellung von verstärkten Beton mit Nutzung dieser Kapseln
Capsules comprenant une fibre individuelle enroulée avec un enrobement de colle, méthode de leur fabrication et méthode de production de béton armé avec l'utilisation de ces capsules

(30) Priority: 29.12.2008 CZ 20080845; 29.12.2008 CZ 200820727 U
(43) Date of publication of application: 14.07.2010
(73) Proprietor: Centrum dopravniho vyzkumu, v.v.i., 636 00 BRNO (CZ)
(72) Inventor: Pospisil, Karel, 616 00 Brno (CZ)
(74) Representative: Malusek, Jiri

(56) References cited:
- EP-A1- 0 557 617
- WO-A1-96/02715
- DE-C1- 4 214 540
- DE-U1- 9 318 666
- ANONYMOUS: "Water-soluble bags for containing reinforcing steel fibres" RESEARCH DISCLOSURE, MASON PUBLICATIONS, HAMPSHIRE, GB, vol. 369, no. 24, 1 January 1995 (1995-01-01), XP007120156 ISSN: 0374-4353

## Description

### Technical field

The present invention relates to the reinforced concrete with added fibers, i.e. so called fibrous concrete, wherein the base substance contains dispersed reinforcing fibers made of diverse materials.

### State of the art

The cement concrete features low tensile strength values. For this reason, the concrete elements, which are subject to tensile, bending or shearing loads, are usually made as reinforced ones. The most usual reinforcing method consists in adding steel reinforcements, thus producing the so called steel concrete, or prestressing reinforcements, thus producing the so called prestressed concrete. During the recent decades, a new technology based on the so called fibrous concrete or wired concrete has been developing wherein tensile stresses are restrained by fibers made of plastic, glass or metallic materials. Ideally, such fibers should be uniformly dispersed in the tensile zone of the concrete element and orientation in the manner ensuring the maximum reinforcing efficiency. The present-day technology, however, does not enable to achieve an effective dispersion of the above type of reinforcement in any concrete mixture, thus producing clusters consisting of unevenly dispersed reinforcing fibers. This results in an insufficient reinforcing performance of the fibers, in local reductions of the cross-sectional strength values or, if such a cluster is located close to the surface of the structure, in affecting the appearance of the respective concrete element.

The document US 3,616,589 suggests to add thin wires into the concrete mixture, such wires being adapted to form diverse shapes, such as rings, pentagons, circular leaves, partitioned rings, rings with spliced ends or the like. These objects have in so far varied sizes and shapes that they are not subject to mutual attracting forces and may be randomly oriented within the mixture. Nevertheless, such elements require expensive preparation methods that are not applicable to any other material but steel.

The document CA 2547694 A1 suggests adding steel fibers with diameters from 1.15 to 1.8 mm. The disclosure, however, does not mention any particular solution of the problem resulting from the formation of fibrous clusters and, besides that, the application of steel is unsuitable.

The document US 7,285,167 suggests adding carbon nanofibers. The disclosure neither mentions any particular solution of the problem resulting from the formation of fibrous clusters.

The document US 4,565,840 suggests adding carbon fibers having dual length, the longer ones having the values of Young's module higher than the base concrete material has and, conversely, the shorter ones having the values of Young's module lower than the base concrete material has The preparation of such dual fibers is arduous and, moreover, it is not obvious whether the embodiment provides a sufficient solution of the aforesaid problem resulting from the formation of fibrous clusters.

The document DE 2 337 129 A1 discloses the device for batching all types of fibers, i.e. those made of steel, plastics, glass, etc., do be added into concrete mixtures. The device consists of the basic hopper made up of a pair of joint funnels, the first funnel being used for batching cement components and the second one serving for preparing concrete admixtures. The first funnel leads into the masticating worm, the latter being movably fitted in the tube located underneath the hopper, in which tube the first mixing phase takes place Subsequently the resulting mixture made up of the individual material constituents is discharged through the overflow into the other tube, namely into the postmixing one. The postmixing tube, which is located in the opposite orientation underneath the first tube, is also equipped with the masticating worm serving as an agitating conveyer. Furthermore, the postmixing tube accommodates the outlet of the second funnel that dispenses the reinforcing fibers to be added into the mixture. The fiber dispensing funnel is equipped with the upstream feeding trough that is driven in oscillation. In this oscillating trough, the fibers are scattered in order to be prevented from forming clusters. The separated fibers are then separately poured into the second funnel from which they get into the mixture to form the final fibrous concrete mixture taken off from the outlet end of the postmixing tube. The device described above is extremely demanding with respect both to the design and to the energy consumption.

The document US 7,267,873 suggests to add fibers made of a steel wire having 0.05 to 0.3 mm in diameter into the concrete mixture in such a manner that fibrous bundles are formed that are not mutually bound any more due to their lightweight constitution. Alternatively, fibers having markedly different lengths may be used. Herein, the drawbacks consist in the use of steel on the one hand and in the demanding preparation of the fibrous bundles and/or differently sized fibers on the other hand.

In WO 96/02715 elements consisting of fibres which are bound into a bunch and held together by a casing material are presented. Such buches are mixed with concrete or mortar and the casing material dissolves in the concrete and the fibres are allowed to spread out in the mixture. Indeed this is a method how to bring the fibers into the mixture, nevertheles the uniform dispersion can not be secured.

In an anonymous article "Water-soluble bags for containing reinforcing steel fibres" Research disclose, Mason publication, Hampshire, vol. 369, No.24, 1995 bags of water soluble material as cellulose or polyvinylalcohol containing about 2-50 kg of steel fibres for dissolving in concrete are mentioned. The steel fiber can be glued together in groups of 5-40 fibres. This is a method how to bring the fibers into the mixture, nevertheles the uniform dispersion can not be secured.

The objective of the present invention is to present a method of the production of the concrete reinforced with added fibers as well as the method of the prefabrication of building elements or monolithic structures with the use of such reinforced concrete, which method should enable the fibers to be uniformly distributed without having to admix the fibers into the mixture in any special manner or to preliminarily adapt the length or size of the same in any demanding process.

### Disclosure of the invention

The aforesaid drawbacks resulting from the use of the unsuitable "one-dimensional fiber-like" form of the reinforcing fibers or wires are eliminated by the capsules intended to be added into the reinforced fibrous concrete, wherein each capsule comprises an individual fiber formed as coiled element and a solid wrapper made of a water-soluble glue and enclosing said coiled element.

A further feature of the invention is the method of the production of the capsules comprising reinforcing fibers wrapped in glue, wherein the individual fiber is prepared as coiled element whereupon the coiled fiber is enclosed In a wrapper made of a water-soluble glue and the capsules are let dry up.

The method of the production of the fibrous concrete consists in that the capsules made in accordance with the aforesaid method are dispensed into the dry concrete mixture or aggregates and the subsequent dry intermixing of the same is followed by the addition of batch water. First, the individual fibers are prepared as coiled elements having their coiled form temporarily fixed by means of a suitable water-soluble glue. The chemical status of the glue used does not affect that of the concrete mixture. This results in the formation of bodies, i.e. capsules having approximately spherical or ellipsoidal shapes and similar granulometric properties to those of the aggregates used as filler for the concrete. The capsules, that have been prepared in the above described way, are then dry intermixed with the aggregates and/or with the binder, particularly with cement. The final homogenous mixture contains uniformly dispersed capsules with coiled fibers. The addition of batch water and subsequent intermixing causes the glue-based shell of the capsule to dissolve, thus releasing the coiled fiber that restores its original shape, i.e. the shape of a straight fiber, due to its recovery properties. This action makes the fibers uniformly dispersed within the mixture.

### Overview of the figures

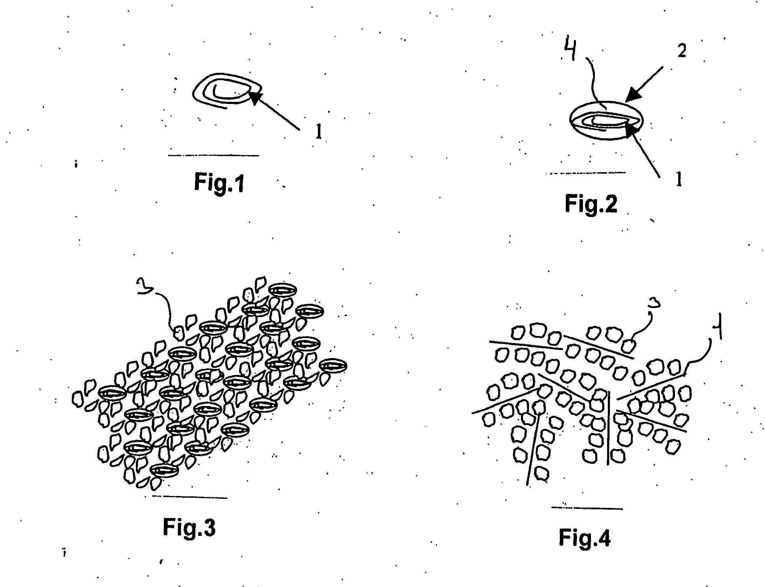

The invention will be further explained by means of the accompanying drawing wherein Fig. 1 shows a coiled fiber, Fig. 2 shows a capsule comprising the glue-based wrapper and the coiled fiber as shown in Fig. 1 to be applied in the method according to the invention, Fig. 3 shows a schematic view of the dry mixture consisting of aggregates with the capsules as shown in Fig. 2 and, if appropriate, of cement, and Fig. 4 illustrates the mixture from Fig. 3 after having been processed by adding batch water and subsequent intermixing.

### Preferred embodiment

Fig. 1 shows a coiled fiber 1. This coiled fiber 1 acquires its shape, which is similar to that of an aggregate grain, in that it is wrapped with a water-soluble glue 4 as seen in Fig. 2. This causes the coiled form of the fiber to get temporarily fixed within the capsule 2 comprising said coiled fiber 1 and said glue 4. In a preferred embodiment of the invention, the process of the production of the capsule 2 may immediately follow the production of the fiber 1. During the preparation of the final reinforced concrete mixture, the capsules 2 are dispensed into aggregates 3 or, if appropriate, into a dry concrete mixture. In this way, the dry mixture consisting of aggregates 3 with the capsules 2 and/or with cement is formed. The subsequent intermixing process makes the dry mixture homogenous as schematically shown in Fig. 3.

In the next step, an appropriate amount of batch water is added to the homogenous mixture and further intermixing causes the glue 4 to dissolve and thus the capsule 2 to fall apart. The released fiber then restores its original straight shape due to its recovery property. This is clearly seen in Fig. 4, During the above process, the concrete mixture with uniformly dispersed fibers is formed. After pouring such mixture into a formwork or applying it in another appropriate way, such as wet spraying, concrete elements or structures reinforced with uniformly dispersed fibers will be obtained.

### Example

The example considers a concrete element reinforced with polypropylene fibers having 18 mm in length. Before being applied to the concrete mixture, the fibers were processed to become coiled elements and wrapped with the water-soluble starch glue to form capsules. The glue was left to air dry, thus making the capsule solid.

The composition of the fibrous concrete was as follows (the batching values below refer to one cubic meter of mixture): Cement CEM I 42,5 R: 380 kg, quarried aggregate classified as fraction 0 -4: 595 kg, crushed aggregate classified as fraction 4 - 8: 241 kg, fraction 8 - 16: 430 kg, fraction 16 - 22: 516 kg, the admixture Adiment FM 62 (0.6% of the weight of cement): 2,30 kg, the admixture Adiment LP S-A 94 (0.3% of the weight of cement): 1,15 kg, coiled fibers - originally having 18 mm in length: 1,3 kg, batch water (w = 0,38): 145 kg. The concrete prepared in the way described above had the following characteristics: compression strength: 32.2 MPa, bending tensile strength: 7.3 MPa.

When compared with the concrete made with the use of the method according to the invention, the concrete having the same composition with untreated fibers had approximately equal compression strength value but markedly lower bending tensile strength value: 5.7 MPa. When comparing destroyed concrete samples using a macroscopic method, the element prepared with the use of initially coiled fibers shows better dispersion of the fibers within the sampling volume.

## Claims

1. Capsules for a reinforced fibrous concrete, **characterized in that** each capsule (2) comprises an individual fiber (1) formed as coiled element and a solid wrapper (4) made of a water-soluble glue and enclosing said coiled element.

2. Method of a production of capsules, **characterized in that** an individual fiber (1) is prepared as coiled element whereupon the coiled fiber (1) is enclosed in a wrapper (4) made of a water-soluble glue and the capsules (2) are let dry up.

3. Method of a production of a reinforced fibrous concrete wherein reinforcing fibers are admixed into the concrete mixture, **characterized in that** the capsules (2) according to claim 1 are dispensed into the dry concrete mixture or aggregates (3) and the subsequent dry intermixing of the same is followed by the addition of batch water.

## Patentansprüche

1. Kapseln für einen verstärkten Beton, **dadurch gekennzeichnet, dass** jede Kapsel (2) eine individuelle Faser (1), die als ein zusammengewickltes Element geform ist, und eine feste Hülle (4), die aus einem wasserlöslichem Klebestoff gemacht ist, beinhaltet, wobei die Hülle das aufgewickelte Element umhüllt.

2. Methode für die Produktion der Beton verstärkten Kapseln, **dadurch gekennzeichnet, dass** die individuelle Faser (1) als ein aufgewickltes Faser vorbereitet ist, nachdem die aufgewickelte Faser (1) in eine Hülle (4) aus einem wasserlöslichem Klebestoff umhüllt wird und die Kapsel zum Trocken gelassen wird.

3. Methode für die Produktion der Beton verstärkten Kapseln, wo die verstärkte Kapseln in die Betonmischung zugegeben sind, **dadurch gekennzeichnet, dass** die Kapseln (2) nach dem Anspruch 1 in eine trockene Betonmischung oder Aggregate (3) eingemischt wird und nach dem Durchmischen kommt es zu einer Wasserzugabe.

## Revendications

1. Capsules pour le beton armé **caractérisée en ce que** chaque capsule (2) compris une fibre individuelle (1) en forme d'un element roulée et une enveloppe solide (4) fait de l'eau-soluble colle enveloppée le dit element roulée.

2. Methode de fabrication les capsules pour le beton armé **caractérisé en ce que** une fibre individuelle (1) est preparée en forme d'un element roulée et après quoi la fibre roulée (1) est enveloppée dans une enveloppe (4) fait de l'eau-soluble colle et les capsules (2) sont séchées.

3. Methode de fabrication les capsules pour le beton armé ou les fibres armés sont additionnées dans le mixage de beton **caractérisé en ce que** les capsules (2) selon la revendication 1 sont dispensées dans la mélange de concrete sec ou dans l'agrégates (3) seches et apres de mixage sec un addition de l'eau est succedée.
